# EUROPÄISCHE PATENTSCHRIFT

(11) **EP 3 934 829 B1**
(45) Veröffentlichungstag und Bekanntmachung des Hinweises auf die Patenterteilung: **06.03.2024**
(21) Anmeldenummer: 19709898.1
(22) Anmeldetag: 07.03.2019
(51) Int. Cl.: B22D 19/00, B29C 45/14, F02M 26/11, F02M 26/54, F02M 26/67, F02M 26/73, F16K 49/00

(54) **VENTILVORRICHTUNG**
VALVE
SOUPAPE

(43) Veröffentlichungstag der Anmeldung: 12.01.2022
(73) Patentinhaber: Pierburg GmbH, 41460 Neuss (DE)
(72) Erfinder: SIMONS, Norbert, 41460 Neuss (DE)
(74) Vertreter: terpatent Patentanwälte und European Patent Attorneys ter Smitten Eberlein -Van Hoof
(86) Internationale Anmeldenummer: PCT/EP2019/055677
(87) Internationale Veröffentlichungsnummer: WO 2020/177865

(56) Entgegenhaltungen:
- EP-A2- 0 908 615
- DE-A1- 19 730 998
- DE-A1-102012 103 374
- DE-A1-102012 223 156
- DE-A1-102015 108 155
- FR-A1- 2 944 333
- JP-A- H0 814 114
- KR-A- 20090 122 590

## Beschreibung

Die Erfindung betrifft eine Ventilvorrichtung mit einem Gehäuse, das einen Einlass und einen Auslass aufweist, einem Strömungskanal, der zwischen dem Einlass und dem Auslass ausgebildet ist, einem im Gehäuse ausgebildeten Ventilsitz, einem Regelkörper, der auf den Ventilsitz aufsetzbar oder zur Herstellung einer fluidischen Verbindung zwischen Einlass und Auslass vom Ventilsitz abhebbar ist, einer mit dem Regelkörper verbundenen Ventilstange, die durch einen Aktor bewegbar ist und einem Fluidkanal, der im Gehäuse ausgebildet ist.

Derartige Ventilvorrichtungen werden in Verbrennungskraftmaschinen, insbesondere als Abgasrückführventil (AGR-Ventil), eingesetzt. Aufgrund hoher Abgastemperaturen können einzelne Komponenten derartiger Ventilvorrichtungen jedoch thermisch stark belastet werden. Um Funktionalitätseinbußen oder einen vollständigen Funktionsausfall solcher Ventilvorrichtungen zu vermeiden, werden besondere Ansprüche an die Ventilkomponenten gestellt. Um die thermische Belastung des AGR-Ventils zu verringern, kann daher im Abgastrakt stromaufwärts der Ventilvorrichtung eine Abgaskühlung erfolgen. Eine solche Einrichtung zur Kühlung des Abgases ist beispielsweise aus der EP 0 908 615 B1 bekannt.

Ferner ist in der DE 10 2012 103 374 A1 eine weitere Möglichkeit offenbart, die Ventilelemente vor thermischer Überlastung zu schützen. Hierbei sind im Gehäuse Kanäle ausgebildet, durch die ein Kühlmedium strömt, das die Wärme aus dem Abgas mittels Wärmeübergang fortspült. Insbesondere bei einem Kaltstart kann so das Gehäuse aufgewärmt und mögliche festgefrorene Bauteile wieder bewegbar gemacht werden. Darüber hinaus können durch die Wärmezufuhr Ablagerungen gemindert werden, da Letztere mit Hilfe der zugeführten Wärmeenergie von der Ventilvorrichtung losgelöst und mit dem Abgas fortgespült werden können. Aufgrund des begrenzten Bauraums kann der Verlauf des Fluidkanals jedoch nicht optimal gelegt werden, sodass lediglich eine lokale Wärmeabführung sichergestellt wird. Insbesondere ist eine Kühlung in den thermisch am stärksten belasteten Bereichen der Ventilvorrichtung, nämlich in der unmittelbaren Umgebung des Ventilsitzes sowie über die Länge der Ventilstange, nicht ohne weiteres möglich. Des Weiteren müssen bei der Fertigung solcher Gehäuse, in denen Fluidkanäle ausgebildet sind, produktionsbedingt Bohrungen hergestellt werden, welche im Betrieb mit zusätzlichen Stopfen verschlossen werden müssen. Dies geht mit einem zusätzlichen Produktions- und Materialaufwand einher. Je nach Herstellungsverfahren können alternativ verlierbare Kerne, beispielsweise Sandkerne, verwendet werden, was den Herstellungsaufwand ebenfalls erhöht.

Des Weiteren ist aus der DE 10 2015 108 155 A1 ein Gasregelventil bekannt, welches einen Kühlkanal aufweist, der durch ein in das Gehäuse bei der Herstellung eingelegtes Rohr gebildet wird.

Des Weiteren ist aus der FR 2 944 333 ein Abgasrückführventil bekannt, in dessen die Ventilstange umgebenden Gehäuse ein Kühlkanal ausgebildet ist.

Es stellt sich also die Aufgabe, eine Ventilvorrichtung zu schaffen, die eine gute Kühlung des Ventils sicherstellt, ohne dass es hierfür eines im Gehäuse gegossenen oder nachträglich eingebrachten bzw. eingearbeiteten Kanals für das Kühlmedium bedarf. Dabei sollen ohne großen Produktionsaufwand auch die thermisch am stärksten belasteten Bereiche der Ventilvorrichtung gekühlt werden.

Diese Aufgabe wird durch eine Ventilvorrichtung mit den Merkmalen des Hauptanspruchs 1 sowie durch ein Verfahren mit den Merkmalen des Hauptanspruchs 9 gelöst.

Dadurch, dass der Fluidkanal vollständig durch ein separates, im Gehäuse angeordnetes Rohr gebildet ist, wobei das Rohr die Ventilstange zumindest teilweise umgibt, entfällt die Notwendigkeit von zusätzlichen Gehäusekanälen, welche von einem Kühlmedium durchströmt werden können. Insgesamt ergibt sich eine einfache Herstellung, da das Rohr während des Herstellungsprozesses als Kern dient, der in Abgrenzung zu konventionellen Herstellungsverfahren, bei denen Kernen verwendet werden, im Anschluss an den Herstellungsprozess nicht entfernt werden muss. Zudem können solche Rohre auch als Heizelement verwendet werden, um bei geringen Temperaturen ein Festfrieren der Ventilstange zu verhindern. Das Rohr umgibt die Ventilstange dabei radial vollständig. Infolge der vollumfänglichen Anordnung des Rohres um die Ventilstange entsteht eine große Kühlungs- bzw. Aufheizungsfläche sowie eine vollumfängliche Abdichtung des Aktorgehäuses. Hierdurch kann die Wärme der Ventilstange effizient zu- bzw. von dieser abgeführt werden. Das Rohr ist zumindest teilweise schraubenförmig ausgebildet und umwickelt radial die Ventilstange. Der auf den Ventilsitz aufsetzbare Regelkörper und die mit ihm verbundene Ventilstange sind hierbei im Strömungskanal angeordnet und stehen damit unmittelbar mit den heißen Abgasen in Kontakt. Aus diesem Grund gehören sie zu den thermisch am stärksten belasteten Bestandteilen eines Abgasrückführventils. Mithin wird auf die Kühlung dieser Ventilkomponenten ein großes Augenmerk gerichtet. Eine möglichst gute Kühlung wiederum kann durch große Kühlungsflächen gewährleistet werden. Mit einem radial um die Ventilstange angeordneten und spiral- bzw. schraubenförmig gebildeten Rohr kann die in das Gehäuse eindringende Wärme aus dem Abgas und den einzelnen Komponenten der Ventilvorrichtung daher wirksam abgeführt werden.

So erfolgt die Herstellung des Gehäuses erfindungsgemäß dadurch, dass zunächst ein schraubenförmig ausgebildetes Rohr bereitgestellt wird, welches eine beliebige, jedoch die in der Ventilvorrichtung gewünschte Form besitzt. Dieses Rohr wird anschließend in eine Gussform eingelegt und hierbei derart positioniert, dass es die gleiche Lage und Ausrichtung besitzt wie im späteren Ventilbetrieb, d.h. im gefertigten Gehäuse. Im Anschluss hierzu wird die Gussform geschlossen und das Rohr mit einer flüssigen Schmelze umgossen oder mit Kunststoff umspritzt. Die Schmelze bildet nach Erstarrung das Gehäuse der Ventilvorrichtung. Der Vorteil dieses Herstellungsverfahrens ist, wie bereits oben erwähnt, dass das Rohr selbst als Kern fungiert, ohne dass es nach der Herstellung entfernt werden muss.

In einer besonders bevorzugten Ausführungsform besteht das Kühl- oder Heizmittel fördernde Rohr aus einem metallischen Werkstoff. Der Einsatz von metallischen Materialien stellt im Gegensatz zu Kunststoffen und Keramiken aufgrund ihrer höheren Wärmeleitfähigkeiten einen besseren Wärmeübergang sicher. Beispielsweise betragen die Wärmeleitfähigkeiten von Aluminiumlegierungen etwa 75 bis 235 W/(m*K). Obwohl keramische Werkstoffe mit verhältnismäßig hohen Wärmeleitfähigkeiten gefertigt werden können, haben auch sie in der Regel geringere Wärmeleitfähigkeiten als Metalle. Des Weiteren sind Rohre in den gewünschten und erforderlichen Formen schwierig aus Keramiken herzustellen.

In einer vorteilhaften Ausgestaltung der Erfindung ist das Rohr, das zum Kühlen oder Heizen der Ventilvorrichtung verwendet wird, in einer Ventilführung des Gehäuses angeordnet. Hierdurch kann das Rohr seine Funktion besser wahrnehmen, da es eine größere Nähe zur thermisch belasteten Ventilstange besitzt und sie besser kühlen oder heizen kann.

In einer besonders bevorzugten Ausführung umgibt das Rohr zumindest teilweise den Ventilsitz radial. Damit geht einher, dass auch der Regelkörper radial umgeben ist und zeitgleich gekühlt wird. Da der Ventilsitz und der Regelkörper im Abgaskanal aufgrund der direkten Anströmung zu den thermisch am stärksten beanspruchten Bestandteilen einer als Abgasrückführventil fungierenden Ventilvorrichtung zählen, ist eine Erweiterung des Rohres bis zum Ventilsitz eine konstruktiv bevorzugte Maßnahme, um den Kühlungswirkungsgrad des Abgases zu steigern und somit die Belastung der Ventilkomponenten zu senken. Des Weiteren bietet es sich auch bei dieser Anordnung an, bei tiefen Umgebungstemperaturen, insbesondere bei Motorstart, warmes Wasser durch die Verrohrung zu fördern, um das Ventil aufzuheizen. Da die Legislative Abgasrückführungen künftig auch bei geringen Temperaturen von bis zu -7°C in Erwägung zieht, besteht unter diesen Bedingungen die Gefahr, dass der Regelkörper im Ventilsitz und/oder die Ventilstange in der Ventilführung festfriert. Ein Aufheizen in diesen Bereichen führt dazu, dass das Ventil unmittelbar nach dem Kaltstart sehr schnell wieder einsatzfähig wird und bleibt.

Vorzugsweise weist das Rohr Wellungen bzw. Riffelungen, d.h. Querschnittsaufweitungen am Außendurchmesser des Rohres und Querschnittseinengungen im Inneren des Rohres, auf. Die damit verbundene Oberflächenvergrößerung resultiert in einem besseren Wärmeübergang vom Abgas zum Rohr und anschließend vom Rohr zum Kühlmittel. Im Falle eines Einsatzes bei tiefen Temperaturen zum Aufheizen der Ventilvorrichtung kehrt sich die Richtung des Wärmestroms entsprechend um, d.h. die Wärme strömt in diesem Fall vom Heizwasser zum Rohr und anschließend vom Rohr zu den einzelnen Ventilkomponenten. Infolge der Querschnittsveränderungen sind Oberflächenvergrößerungen des Rohres auf das zwei- bis dreifache realisierbar.

In einer hierzu weiterführenden Ausgestaltung der Erfindung verlaufen die Riffelungen axial beabstandet zueinander. Die Riffelungen sind daher stets derart angeordnet, dass jede einzelne von ihnen in einer separaten Ebene senkrecht zur Mittelachse des Rohres angeordnet ist. Dies gilt ebenfalls in den Rohrabschnitten, deren Rohrachse nicht gerade verlaufen, sondern beispielsweise spiral- bzw. schraubenförmig. Der Vorteil einer derartigen geriffelten Ausführung liegt in einer größeren Verweilzeit des Kühlmittels im Rohr aufgrund des höheren Strömungswiderstandes.

Eine besondere und bevorzugte Ausgestaltung eines solchen Rohres ist ein Flexrohr. Dieses kann in Analogie zu einem zylindrischen Rohr mit einer unveränderlichen Wandstärke entlang der Rohrachse zu einer Spirale geformt werden, bietet jedoch darüber hinaus die Vorteile eines verbesserten Wärmeübergangs infolge der Oberflächenvergrößerung.

In einer vorteilhaften Ausführungsform sind der Fluid-Einlassstutzen und der Fluid-Auslassstutzen mit dem Rohr einstückig ausgebildet. Hierbei ragen Ein- und Auslassstutzen aus dem Gehäuse hinaus und dienen als Anschluss für die Kühlmittelleitungen der Verbrennungskraftmaschine, sodass eine Zirkulation des Fluids zum Kühlen oder Aufheizen ermöglicht wird. Durch diese Anordnung entfällt die Notwendigkeit zusätzlicher Bauteile bzw. Rohre, die als Anschluss verwendet werden.

In einer vorteilhaften Weiterführung des Verfahrens wird das Rohr vor dem Einlegen und Positionieren in der Gussform zumindest teilweise schraubenförmig gebogen, da durch diese Ausführungsform eine möglichst große Kühlungsfläche an der Ventilstange realisiert wird. Hierbei kann es sich um ein weitgehend schraubenförmiges oder aber um ein abschnittsweise schraubenförmiges und abschnittsweise gerade ausgebildetes Rohr handeln.

In einer bevorzugten Ausführung der Ventilvorrichtung wird das Rohr aus einem Edelstahl oder einer Aluminiumlegierung hergestellt. Metallische Rohre weisen eine hohe Wärmeleitfähigkeit auf und ermöglichen insofern einen guten Wärmeübergang zur Kühlung und/oder zum Aufheizen der Ventilvorrichtung.

Vorzugsweise wird das Gehäuse der Ventilvorrichtung aus einem Kunststoff gefertigt. Hierfür eignet sich das Spritzgussverfahren sehr gut, da hiermit Teile in großer Stückzahl kostengünstig und bei Bedarf mit höchster Präzision hergestellt werden können. Durch die mit Hilfe des Rohres in das Gehäuse integrierte Kühlung ist das im Vergleich zu Metallgehäusen weniger thermisch belastbare Kunststoffgehäuse auch vor thermischer Überlastung geschützt.

Es wird somit eine Ventilvorrichtung geschaffen, die eine gute Kühlung und/oder Aufheizung des Ventils sicherstellt. Hierfür bedarf es keiner im Gehäuse gesondert herzustellender Kanäle. Die Herstellung ist aufgrund der seriellen Fertigung des Rohres und anschließend des Gehäuses, welches das Rohr in sich beherbergt, einfach. Insbesondere können die thermisch am stärksten beanspruchten Bereiche der Ventilvorrichtung durch eine optimale Gestalt sowie eine nah am Ventil angeordnete Führung des Rohres gekühlt werden.

Weitere Einzelheiten und Vorteile der vorliegenden Erfindung ergeben sich aus der nachfolgenden Beschreibung der Ausführungsbeispiele in Verbindung mit den Zeichnungen.
Figur 1 zeigt eine Seitenansicht einer erfindungsgemäßen Ventilvorrichtung in einer teilweise geschnittenen Darstellung.
Figur 2 zeigt eine perspektivische Ansicht der Ventilstange mit dem sie radial umgebenden Rohr aus Figur 1.
Figur 3 zeigt eine perspektivische Ansicht einer alternativen Ausführung des Rohres der erfindungsgemäßen Ventilvorrichtung.

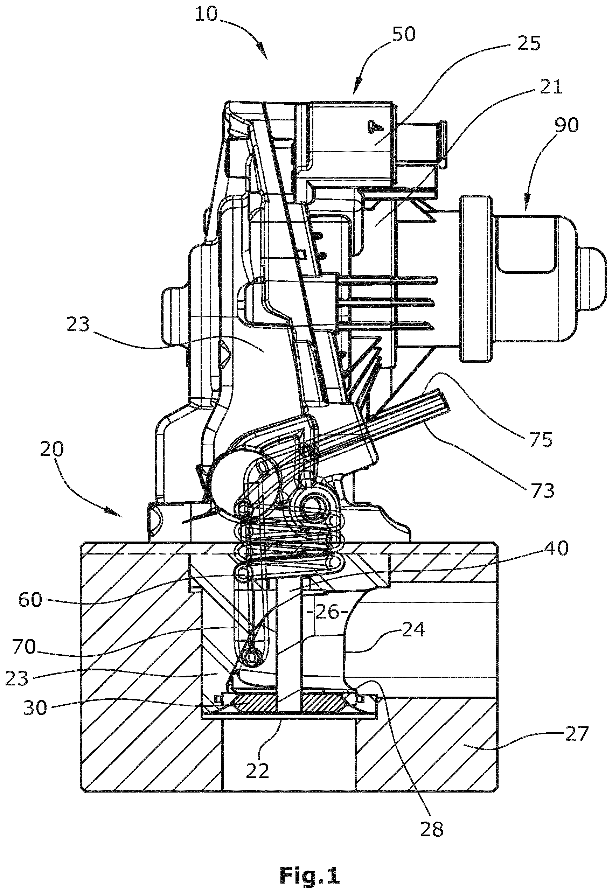

Die erfindungsgemäße, in Figur 1 dargestellte Ventilvorrichtung 10 besteht aus einem Gehäuse 20, das seinerseits aus einem Aktorgehäuse 21, einem Strömungsgehäuse 23 und einem Anschlussgehäuse 27 besteht.

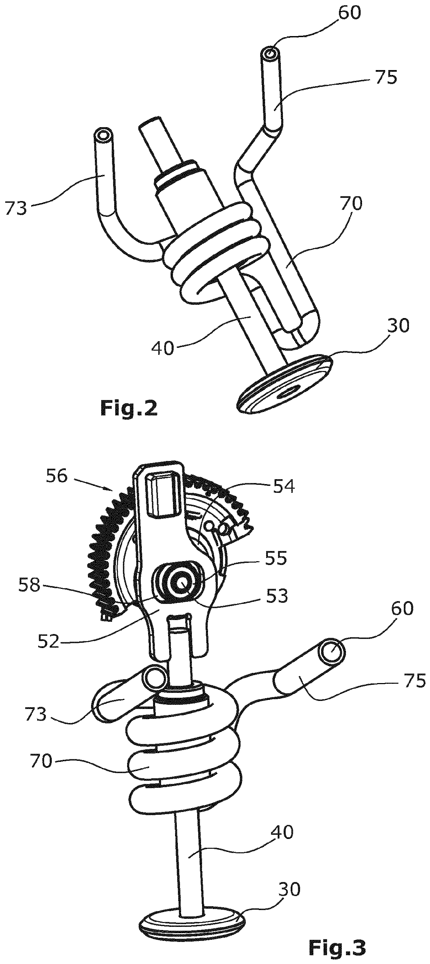

In dem Aktorgehäuse 21 ist ein Aktor 50 angeordnet. Dieser umfasst einen Elektromotor 90, dessen Bestromung über einen Stecker 25 einen Exzenter 54 indirekt über ein Aktorgetriebe 56 in eine Rotationsbewegung versetzt. Der Exzenter 54 weist in Bezug auf seine eigene Drehachse einen exzentrisch angeordneten Bolzen 53 auf, auf dem ein Innenring eines Kugellagers 55 befestigt ist. Ein Außenring des Kugellagers 55 und somit das gesamte Kugellager 55 wiederum ist in einer Kulisse 58 eines Koppelglieds 52 gelagert (siehe Fig. 3). Hierbei ist die Kulisse 58 rechteckig ausgebildet, wobei die Höhe des Rechtecks dem Außendurchmesser des Kugellagers 55 entspricht, die Breite hingegen größer ist als der Außendurchmesser des Kugellagers 55. So ergibt die Rotation des Exzenters 54 und damit auch des Kugellagers 55 innerhalb der Kulisse 58 eine translatorische, in Bezug auf die Ventilstange 40 axialgerichtete Bewegung des Koppelglieds 52. Die mit dem Koppelglied 52 bewegbar angeordnete Ventilstange 40 kann hierdurch in Axialrichtung ebenfalls translatiert werden. Der Regelkörper 30, der seinerseits mit der Ventilstange 40 verbunden ist, kann hierdurch von einem Ventilsitz 28 abgehoben und wieder auf ihn aufgesetzt werden.

Das Strömungsgehäuse 23, welches als Steckgehäuse ausgebildet ist, weist einen Einlass 22 und einen Auslass 24 auf, über die das Abgas der Ventilvorrichtung 10 zu- und von dieser wieder abgeführt werden kann. Hierbei ist der Einlass 22 mit dem Auslass 24 fluidisch über einen Strömungskanal 26 verbunden.

Auf den im Strömungsgehäuse 23 ausgebildeten Ventilsitz 28 kann der translatorisch bewegbare Regelkörper 30 aufgesetzt werden. Durch den Kontakt des Regelkörpers 30 mit dem Ventilsitz 28 kann die Ventilvorrichtung 10 geschlossen und die Strömung des Abgases unterbunden werden. Ausgehend vom geschlossenen Zustand der Ventilvorrichtung 10 kann durch Betätigung des Aktors 50 der Regelkörper 30 vom Ventilsitz 28 abgehoben werden. Auf diese Weise kann die Strömung des Abgases im Strömungskanal 26 freigegeben werden, wobei der genaue Massen- bzw. Volumenstrom des Abgases durch das Ausmaß der axialen Bewegung des Regelkörpers 30 geregelt wird.

Bei der Herstellung des Strömungsgehäuses 23 der Ventilvorrichtung 10 wird ein zuvor in die gewünschte Form bzw. Ausführung gebogenes Rohr 70 bereitgestellt. Dieses Rohr 70 wird innerhalb einer Gussform in der gewünschten Lage und Ausrichtung positioniert. Nach dem Schließen der Gussform wird das Rohr 70 entweder mit einer metallischen Schmelze umgossen oder mit Kunststoff umspritzt, wobei die Schmelze nach ihrer Erstarrung das Gehäuse 20 der Ventilvorrichtung 10 bildet.

Die beiden Enden des Rohres 70 werden bei der Positionierung innerhalb der Gussform derart angeordnet, dass sie bei der Herstellung des Gehäuses 20 mit der Schmelze nicht in Kontakt kommen, d.h. von dieser nicht umgossen bzw. umspritzt werden. Die beiden Enden des Rohres 70 ragen daher aus dem Strömungsgehäuse 23 heraus.

Diese beiden Enden des Rohres 70 sind parallel zueinander angeordnet und bilden jeweils einen Fluid-Einlassstutzen 73 und einen Fluid-Auslassstutzen 75. Der Fluid-Einlassstutzen 73 und der Fluid-Auslassstutzen 75 fungieren hierbei als Anschlüsse, um einen Kreislauf des Fluids zu schließen, wobei das Fluid zum Aufheizen oder zur Kühlung der Ventilvorrichtung 10 verwendet werden kann. Das Fluid durchströmt hierbei einen Fluidkanal 60 im Rohr 70.

Die in Figur 1 und Figur 2 offenbarte Ausführung des Rohres 70 ist partiell schraubenförmig ausgebildet, wobei der schraubenförmige Abschnitt des Rohres 70 die Ventilstange 40 radial umgibt. Die in diesen Figuren dargestellte Ausführungsform besitzt drei bis vier Umwicklungen der Ventilstange 40 mittels des Rohres 70, wobei die Anzahl der Umwicklungen von dem zur Verfügung stehenden Bauraum innerhalb der Ventilvorrichtung 10 bzw. von der axialen Erstreckung des Strömungsgehäuses 23 abhängt. Durch diese schraubenförmige Ausgestaltung des Rohres 70 ist eine aktive Kühlung über den ganzen Umfang sowie in relativ großer Länge der Ventilstange 40 sichergestellt und ein nah an einer thermisch stark beanspruchten Komponente der Ventilvorrichtung 10 angeordneter Verlauf des Rohres 70 realisiert. Auf diese Weise wird je nach Betriebsmodus eine effiziente Wärmeabfuhr bzw. Wärmezufuhr gewährleistet. Des Weiteren wird durch die Anordnung des Rohres 70 zwischen dem Aktorgehäuse 21 und dem Strömungsgehäuse 23 eine thermische Abschirmung des Aktors gegen die Wärme des Abgases sichergestellt.

An dem schraubenförmig ausgebildeten Abschnitt des Rohres 70 schließt sich ein Abschnitt an, der lateral parallel zur Achse der Ventilstange 40 angeordnet ist. Der Verlauf des Rohres 70 erfolgt hierbei zunächst hin zum Regelkörper 30 und macht oberhalb von diesem eine 180°-Krümmung und verläuft anschließend parallel zur Ventilstange 40 weg vom Regelkörper 30. Der Abschnitt des Rohres 70, der durch die 180°-Krümmung gekennzeichnet ist, ist hierbei möglichst nah zum Ventilsitz 28 geführt. Die Nähe zum Regelkörper 30 und zum Ventilsitz 28 stellt sicher, dass auch die thermisch am stärksten belasteten Bestandteile der Ventilvorrichtung 10, d.h. die Komponenten im umliegenden Bereich des Ventilsitzes 28, möglichst effizient gekühlt werden. Bei tiefen Temperaturen kann alternativ durch die Förderung eines warmen Fluids durch den Fluidkanal 60 ein eventuell mit dem Ventilsitz 28 festgefrorener Regelkörper 30 wieder bewegbar gemacht werden.

Zudem ist in Figur 3 eine alternative Ausgestaltung des Rohres 70 zu sehen. Hierbei ist das Rohr 70 weitgehend schraubenförmig ausgebildet. Lediglich diejenigen Abschnitte des Rohres 70, die den jeweiligen Übergang vom Fluid-Einlassstutzen 73 zum schraubenförmigen Abschnitt bzw. vom Fluid-Auslassstutzen 75 zum lateral parallel zur Ventilstange 40 angeordneten Abschnitt des Rohres 70 bilden, sind nicht schraubenförmig ausgebildet, sondern um mindestens eine Achse gebogen. Diese gebogenen Abschnitte sind so kurz wie möglich ausgebildet, um im Fluidkanal 60 einen geringen Strömungswiderstand zu gewährleisten.

Die erfindungsgemäße Ventilvorrichtung gewährleistet eine gute Kühlung und Aufheizung durch die nahe Führung des Rohres an den zum Teil thermisch sehr stark beanspruchten Bauteilen. Des Weiteren sind angesichts des separaten Rohres keine geometrisch aufwendigen Bohrungen bzw. Kanäle im Gehäuse der Ventilvorrichtung vorzusehen, was den Produktionsaufwand senkt und den notwendigen Bauraum verringert. Darüber hinaus werden durch den Wegfall von als Fluidkanal dienenden Gehäusebohrungen Zusatzkomponenten wie Stopfen entbehrlich.

Es sollte deutlich sein, dass der Schutzbereich der vorliegenden Anmeldung nicht auf die beschriebenen Ausführungsbeispiele beschränkt ist. Eine Anwendung der Ventivorrichtung ist auch in Hydraulikkreisläufen denkbar, die eine Kühlung oder Aufheizung benötigen. Überdies ist eine bis zum Ventilsitz reichende, schraubenförmige und die Ventilstange vollumfänglich umgebende Ausführung denkbar. Insbesondere kann das Rohr auch als Flexrohr mit entsprechenden Einengungen und Aufweitungen beziehungsweise Wellungen oder Riffelungen ausgeführt werden. Das Gehäuse kann selbstverständlich auch durch Aluminiumdruckguss oder -sandguss oder aus anderen Metallen hergestellt werden.

### Bezugszeichenliste

- 10: Ventilvorrichtung
- 20: Gehäuse
- 21: Aktorgehäuse
- 22: Einlass
- 23: Strömungsgehäuse
- 24: Auslass
- 25: Stecker
- 26: Strömungskanal
- 27: Anschlussgehäuse
- 28: Ventilsitz
- 30: Regelkörper
- 40: Ventilstange
- 42: Ventilführung
- 50: Aktor
- 52: Koppelglied
- 53: Bolzen
- 54: Exzenter
- 55: Kugellager
- 56: Aktorgetriebe
- 58: Kulisse
- 60: Fluidkanal
- 70: Rohr
- 73: Fluid-Einlassstutzen
- 75: Fluid-Auslassstutzen
- 90: Elektromotor

## Patentansprüche

1. Ventilvorrichtung (10) mit
einem Gehäuse (20), das einen Einlass (22) und einen Auslass (24) aufweist,
einem Strömungskanal (26), der zwischen dem Einlass (22) und dem Auslass (24) ausgebildet ist,
einem im Gehäuse (20) ausgebildeten Ventilsitz (28),
einem Regelkörper (30), der auf den Ventilsitz (28) aufsetzbar oder zur Herstellung einer fluidischen Verbindung zwischen Einlass (22) und Auslass (24) vom Ventilsitz (28) abhebbar ist,
einer mit dem Regelkörper (30) verbundenen Ventilstange (40), die durch einen Aktor (50) bewegbar ist und
einem Fluidkanal (60), der im Gehäuse (20) ausgebildet ist,
**dadurch gekennzeichnet, dass**
der Fluidkanal (60) vollständig durch ein separates, im Gehäuse (20) angeordnetes Rohr (70) gebildet ist, wobei das Rohr (70) die Ventilstange (40) radial vollständig umgibt und zumindest teilweise schraubenförmig ausgebildet ist.

2. Ventilvorrichtung (10) nach Anspruch 1, **dadurch gekennzeichnet, dass** das Rohr (70) metallisch ausgebildet ist.

3. Ventilvorrichtung (10) nach Anspruch 1 oder 2,
**dadurch gekennzeichnet, dass** das Gehäuse (20) eine Ventilführung aufweist, in der das Rohr (70) angeordnet ist.

4. Ventilvorrichtung (10) nach einem der vorangegangenen Ansprüche, **dadurch gekennzeichnet, dass** das Rohr (70) zumindest teilweise den Ventilsitz (28) radial umgibt.

5. Ventilvorrichtung (10) nach einem der vorangegangenen Ansprüche, **dadurch gekennzeichnet, dass** das Rohr (70) mit Wellungen bzw. Riffelungen ausgebildet ist bzw. Aufweitungen und Einengungen aufweist.

6. Ventilvorrichtung (10) nach Anspruch 5, **dadurch gekennzeichnet, dass** die Riffelungen axial beabstandet zueinander bzw. quer zur Mittelachse des Rohres (70) verlaufen.

7. Ventilvorrichtung (10) nach Anspruch 6, **dadurch gekennzeichnet, dass** das Rohr (70) durch ein Flexrohr repräsentiert ist.

8. Ventilvorrichtung (10) nach Anspruch 1, **dadurch gekennzeichnet, dass** das Rohr (70), ein Fluid-Einlassstutzen (73) sowie ein Fluid-Auslassstutzen (75) einstückig ausgebildet sind, wobei der Fluid-Einlassstutzen (73) und der Fluid-Auslassstutzen (75) aus dem Gehäuse (20) ragen.

9. Verfahren zur Herstellung eines Gehäuses (20) einer Ventilvorrichtung (10) nach einem der vorangegangenen Ansprüche mit folgenden Schritten:
a. Bereitstellen eines zumindest teilweise schraubenförmig ausgebildeten Rohres (70),
b. Einlegen und Positionieren des Rohres (70) in einer Gussform,
c. Schließen der Gussform,
d. Umgießen oder Umspritzen des Rohres (70) mit einer flüssigen Schmelze, wobei die Schmelze nach Erstarrung das Gehäuse (20) der Ventilvorrichtung (10) bildet.

10. Verfahren nach Anspruch 9, **dadurch gekennzeichnet, dass** das Rohr (70) vor dem Einlegen in die Gussform zumindest teilweise sschraubenförmig gebogen wird.

11. Verfahren nach Anspruch 9, **dadurch gekennzeichnet, dass** das Rohr (70) aus einem Edelstahl oder einer Aluminiumlegierung hergestellt wird.

12. Verfahren nach Anspruch 9, **dadurch gekennzeichnet, dass** das Gehäuse (20) in einem Spritzgussverfahren aus einem Kunststoff hergestellt wird.

## Claims

1. Valve device (10) with
a housing (20) comprising an inlet (22) and an outlet (24),
a flow channel (26) configured between the inlet (22) and the outlet (24),
a valve seat (28) configured in the housing (20),
a control body (30) which can be placed on the valve seat (28) or lifted off the valve seat (28) to create a fluidic connection between the inlet (22) and the outlet (24),
a valve rod (40) connected to the control body (30) and movable by an actuator (50), and
a fluid channel (60) configured in the housing (20),
**characterized in that**
the fluid channel (60) is completely defined by a separate tube (70) arranged in the housing (20), wherein the tube (70) completely surrounds the valve rod (40) radially and is at least partially helically formed.

2. Valve device (10) according to claim 1,
**characterized in that**
the tube (70) is made of a metal material.

3. Valve device (10) according to claim 1 or 2,
**characterized in that**
the housing (20) comprises a valve guide in which the tube (70) is arranged.

4. Valve device (10) according to one of the preceding claims,
**characterized in that**
the tube (70) at least partially radially surrounds the valve seat (28).

5. Valve device (10) according to one of the preceding claims,
**characterized in that**
the tube (70) is comprised with corrugations or alternatively with expansions and constrictions.

6. Valve device (10) according to claim 5,
**characterized in that**
the corrugations are arranged axially spaced apart from one another or transversely to the centre axis of the tube (70).

7. Valve device (10) according to claim 6,
**characterized in that**
the tube (70) is made from a flexible tube.

8. Valve device (10) according to claim 1,
**characterized in that**
the tube (70), a fluid inlet port (73) and a fluid outlet port (75) are configured in unitary manner, wherein the fluid inlet port (73) and the fluid outlet port (75) protrude from the housing (20).

9. Method of manufacturing a housing (20) of a valve device (10) according to any one of the preceding claims, with the following steps:
a. Providing an at least partially helically configured tube (70),
b. Placing and positioning the tube (70) in a mould,
c. Closing the mould,
d. Casting or overmoulding the tube (70) with a liquid melt, wherein the melt defines the housing (20) of the valve device (10) after solidification.

10. The method according to claim 9,
**characterized in that**
the tube (70) is at least partially bent in a helical shape before being inserted into the mould.

11. The method according to claim 9,
**characterized in that**
the tube (70) is made of a stainless steel or an aluminium alloy.

12. The method according to claim 9,
**characterized in that**
the housing (20) is manufactured from a plastic in an injection moulding process.

## Revendications

1. Dispositif de vanne (10) avec
un boîtier (20) comprenant une entrée (22) et une sortie (24), un canal d'écoulement (26) formé entre l'entrée (22) et la sortie (24),
un siège de vanne (28) formé dans le boîtier (20),
un corps de régulation (30) qui peut être posé sur le siège de vanne (28) ou qui peut être soulevé du siège de vanne (28) pour établir une connexion fluidique entrel'entrée (22) et la sortie (24), une tige de vanne (40) reliée au corps de régulation (30), qui peut être déplacée par un actionneur (50) et
un canal de fluide (60) formé dans le boîtier (20),
**caractérisé en ce que**
le canal de fluide (60) est entièrement formé par un tube (70) séparé, disposé dans le boîtier (20), le tube (70) entourant radialement entièrement la tige de vanne(40) et étant réalisé au moins partiellement en forme d'hélice.

2. Dispositif de vanne (10) selon la revendication 1, **caractérisé en ce que** le tube (70) est métallique.

3. Dispositif de vanne (10) selon la revendication 1 ou 2, **caractérisé en ce que** le boîtier (20) comprend un guide de vanne dans lequel est disposé le tube (70).

4. Dispositif de vanne (10) selon l'une des revendications précédentes, **caractérisé en ce que** le tube (70) entoure radialement au moins partiellement le siège devanne (28).

5. Dispositif de vanne (10) selon l'une des revendications précédentes, **caractérisé en ce que** le tube (70) est formé avec des ondulations ou des cannelures ou comprenddes élargissements et des rétrécissements.

6. Dispositif de vanne (10) selon la revendication 5, **caractérisé en ce que** les cannelures sont espacées axialement les unes des autres ou s'étendent transversalementà l'axe central du tube (70).

7. Dispositif de vanne (10) selon la revendication 6, **caractérisé en ce que** le tube (70) est représenté par un tube flexible.

8. Dispositif de vanne (10) selon la revendication 1, **caractérisé en ce que** le tube (70), un embout d'entrée de fluide (73) ainsi qu'un embout de sortie de fluide(75) sont formés d'une seule pièce, l'embout d'entrée de fluide (73) et l'embout de sortie de fluide (75) faisant saillie hors du boîtier (20).

9. Méthode de fabrication d'un boîtier (20) d'un dispositif de vanne (10) selon l'une des revendications précédentes, comprenant les étapes suivantes:
a. Fournir un tube (70) au moins partiellement hélicoïdal,
b. Mise en place et positionnement du tube (70) dans un moule de coulée,
c. Fermeture du moule de coulée,
d. Coulée ou surmoulage du tube (70) avec une matière liquide en fusion, la matière en fusion formant, après solidification, le boîtier (20) du dispositif devanne (10).

10. Méthode selon la revendication 9, **caractérisée en ce que** le tube (70) est au moins partiellement cintré en forme de vis avant d'être placé dans le moule de coulée.

11. Méthode selon la revendication 9, **caractérisée en ce que** le tube (70) est fabriqué à partir d'un acier inoxydable ou d'un alliage d'aluminium.

12. Méthode selon la revendication 9, **caractérisée en ce que** le boîtier (20) est fabriqué en matière plastique par un procédé de moulage par injection.
